# FASCICULE DE BREVET EUROPEEN

(11) **EP 3 413 233 B1**
(45) Date de publication et mention de la délivrance du brevet: **03.11.2021**
(21) Numéro de dépôt: 18170947.8
(22) Date de dépôt: 04.05.2018
(51) Int. Cl.: G06K 9/00, G06K 9/20

(54) **PROCEDE DE DETECTION D'UNE FAUSSE EMPREINTE**
VERFAHREN ZUR ERKENNUNG EINES FALSCHEN FINGERABDRUCKS
METHOD FOR DETECTING A FAKE FINGERPRINT

(30) Priorité: 07.06.2017 FR 1755074
(43) Date de publication de la demande: 12.12.2018
(73) Titulaire: Idemia Identity & Security France, 92400 Courbevoie (FR)
(72) Inventeur: BEAUDET, M. Jean, 95300 Pontoise (FR)
(74) Mandataire: Nony

(56) Documents cités:
- FR-A1- 3 040 225
- US-A1- 2003 025 897
- US-B2- 8 498 458

## Description

La présente invention concerne le domaine de l'authentification biométrique.

La reconnaissance d'empreintes digitales s'effectue à l'aide de capteurs optiques qui acquièrent une image de la texture du doigt. Cette acquisition s'effectue classiquement sous une illumination uniforme, à une ou plusieurs longueurs d'ondes, en général une longueur d'onde unique.

Une fraude classique consiste à copier l'empreinte d'une personne à son insu sur un matériau artificiel, puis à utiliser la fausse empreinte pour tromper le capteur optique.

Il a déjà été proposé diverses solutions pour apporter une solution à ce problème.

La demande FR 3 030 834 A1 divulgue un procédé d'acquisition et d'analyse d'empreintes dans lequel la fluorescence émise par un objet en réponse à un faisceau d'excitation est analysée en vue d'établir un critère de validité permettant de discriminer des tissus biologiques par rapport à d'autres objets.

La demande WO 2015/091701 A1 décrit un procédé destiné à valider qu'un élément est recouvert d'une vraie peau, où l'on capture une zone éclairée de l'élément directement éclairée par un faisceau lumineux et une zone périphérique. Une zone d'analyse recouvrant la zone éclairée et la zone périphérique est découpée en plusieurs zones de calcul pour chacune desquelles une courbe d'intensité moyenne est établie afin d'être comparée à une courbe de référence.

La demande FR 3 040 225 Al divulgue un procédé d'authentification biométrique permettant de distinguer un élément du corps humain authentique d'un leurre, dans lequel la validation de l'authenticité est mis en œuvre sur la base d'une comparaison entre au moins une première image de l'objet éclairé par une première source lumineuse et au moins une deuxième image de l'objet éclairé par une deuxième source lumineuse, l'authenticité de l'objet en tant qu'élément du corps humain étant validée ou non en fonction du résultat du traitement de validation.

La demande US 2003/025897 A1 décrit une méthode d'authentification basée sur l'émission de deux faisceaux de détection, l'un de couleur rouge, l'autre de couleur verte, où le contraste différentiel, i.e. la différence entre les niveaux d'intensité de lumière réfléchie selon les ondulations d'une empreinte digitale, varie en fonction de la couleur du faisceau utilisé.

L'invention vise à perfectionner encore les procédés d'authentification biométrique et les capteurs utilisés à cette fin, notamment afin de disposer d'une solution simple à mettre en œuvre, permettant de détecter une tentative de fraude par utilisation d'un matériau artificiel.

L'invention a ainsi pour objet, selon un premier de ses aspects, un procédé de détection d'une tentative de fraude par utilisation d'une matière artificielle lors d'une acquisition biométrique, notamment d'empreintes digitales, comportant les étapes consistant à :
- Illuminer avec un éclairage prédéfini uniforme sous au moins une longueur d'onde une surface de l'individu objet de l'acquisition biométrique, cette surface présentant une texture, et acquérir une première image de cette surface à cette longueur d'onde,
- illuminer avec un éclairage non uniforme sous au moins une longueur d'onde ladite surface et acquérir au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position et invariable selon un second paramètre de position,
- calculer, pour un ensemble d'au moins n emplacements regroupant chacun des pixels ayant même premier paramètre de position et différentes valeurs du deuxième paramètre de position sur la première et la deuxième image, une correction variant selon le premier paramètre de position, à appliquer localement à la première image pour amener l'amplitude de la texture sur la première image sensiblement au niveau de celle sur la deuxième image au même emplacement, ou une correction à appliquer localement à la deuxième image pour amener l'amplitude de la texture sur la deuxième image sensiblement au niveau de celle sur la première image au même emplacement,
- sur la base de la correction ainsi calculée (par exemple sur la base des *n* valeurs de correction qui ont été calculées), représentative de ladite loi, générer une information sur le caractère artificiel ou non de la matière sur laquelle s'effectue l'acquisition biométrique.

Ladite information peut être générée sur la base d'une comparaison, directe ou indirecte, des valeurs de la correction ou de valeurs représentatives de l'évolution de la correction avec des données de référence.

On peut calculer une pente à partir de valeurs de correction et la comparer à une pente de référence. On peut aussi utiliser un classifieur généré par exemple à partir des valeurs de correction directement ou encore indirectement via le calcul de pentes. Les classifieurs peuvent comporter des paramètres définis par apprentissage en fonction des données de référence.

Le nombre d'emplacements est de préférence supérieur ou égal à 10, mieux à 50.

L'invention permet d'obtenir une information représentative de la loi donnant la variation de l'amplitude de la lumière diffusée en fonction de la distance parcourue dans le tissu concerné, d'une façon particulièrement simple et efficace.

Par « éclairage uniforme », il faut comprendre uniforme en faisant abstraction des effets éventuels de la lumière ambiante qui peuvent être corrigés par un traitement de l'image et aux défauts près de l'éclairage utilisé lesquels peuvent également être corrigés sur la première image. On peut tolérer sur la première image un défaut d'uniformité s'il ne nuit pas outre mesure à la performance recherchée. L'éclairage uniforme peut correspondre à une variation résiduelle de l'intensité lumineuse reçue I meilleure que 5%, c'est-à-dire qu'en tout point de la surface d'intérêt illuminée sur laquelle on calcule le gain ou l'atténuation, on a I = Iₒ +/- 5%, où Iₒ est une constante.

Par « amener sensiblement au niveau », il faut comprendre que l'on détermine le gain ou l'atténuation qui permet de rendre l'écart entre le signal qui sert de référence et le signal amplifié ou atténué suffisamment faible pour obtenir le ratio signal sur bruit recherché. On peut ainsi chercher à minimiser une norme euclidienne matérialisant cet écart, comme décrit ci-après.

De préférence, la correction est obtenue en calculant un produit scalaire normalisé pour un ensemble d'au moins n vecteurs S_{b} de la première image, chaque vecteur S_{b} ayant pour composantes les valeurs des pixels de l'image repérés sur l'image par la même valeur du premier paramètre de position et occupant des positions respectives différentes selon le deuxième paramètre de position, et pour n vecteurs Sₐ de la deuxième image, chaque vecteur Sₐ ayant pour composantes les valeurs des pixels de l'image repérés sur l'image par la même valeur du premier paramètre de position et occupant des positions respectives différentes selon le deuxième paramètre de position, selon la formule Γ= Sₐ.S_{b}/S_{b}.S_{b}.

Une telle correction minimise la norme ||Sₐ-ΓS_{b}||, et s'avère ainsi optimale.

Dans le cas d'une correction β à appliquer localement à la deuxième image pour amener l'amplitude de la texture sur la deuxième image sensiblement au niveau de celle sur la première image au même emplacement, l'écart est minimum pour β = Sₐ.Sb/Sₐ.Sₐ, cette valeur minimisant ||βSₐ-Sb||.

Le calcul de la correction Γ= Sₐ.S_{b}/S_{b}.S_{b} s'avère préférable au calcul de la correction β = Sₐ.Sb/Sₐ.Sₐ, car les meilleurs résultats sont obtenus en projetant sur le signal ayant le meilleur rapport signal sur bruit, i.e. sur l'image à éclairage uniforme. L'avantage d'une normalisation par rapport au vecteur correspondant à l'éclairage uniforme S_{b} est que l'on obtient une courbe moins bruitée puisque l'on a essentiellement neutralisé l'information non pertinente du motif local de l'empreinte. On peut générer sur la base de la correction Γ ainsi déterminée, par comparaison à des données de référence, une information sur le caractère artificiel ou non de la matière sur laquelle s'effectue l'acquisition biométrique.

Le premier paramètre de position est par exemple le paramètre d'abscisse x dans un repère orthonormé (x, y) associé à la première et à la deuxième image, le deuxième paramètre étant l'ordonnée. Il peut s'agir encore du paramètre r dans un repère à coordonnées polaires (r, θ), θ étant le deuxième paramètre de position.

L'éclairage non uniforme peut comporter un ou plusieurs motifs lumineux s'étendant selon le second paramètre de position pour générer un profil de diffusion linéique selon le premier paramètre de position. L'éclairage non uniforme peut ainsi comporter plusieurs bandes lumineuses parallèles entre elles et perpendiculaires à un axe défini par le premier paramètre de position.

Alternativement, l'éclairage non uniforme peut comporter un ou plusieurs motifs à symétrie de révolution, notamment sous forme de disque(s) ou d'anneau(x). Le ou les motifs sont centrés sur le repère à coordonnées polaires (r, θ), de façon à être invariables selon θ.

De préférence, l'acquisition des première et deuxième images est synchrone.

Dans le cas où l'acquisition des première et deuxième images est asynchrone, le procédé selon l'invention comporte avantageusement un recalage spatial des première et deuxième images préalablement au calcul de la correction précitée.

Dans ce cas, la deuxième image est avantageusement retraitée avant recalage spatial en calculant une approximation P(x ou r) de l'intensité lumineuse I(x ou r) sur l'image selon le premier paramètre de position et en utilisant cette intensité approximée, de préférence en retranchant à la deuxième image cette intensité approximée, pour obtenir une image retraitée de la texture seule, facilitant sa comparaison avec la première image et l'opération de recalage spatial.

Cette intensité approximée est de préférence déterminée par approximation polynomiale.

De préférence, on procède à plusieurs acquisitions de deuxièmes images à des longueurs d'ondes différentes, notamment dans le rouge, le vert et le bleu. On peut calculer pour chacune de ces images une correction comme ci-dessus. On obtient ainsi plusieurs profils de diffusion à comparer à des données de référence, ce qui permet d'être encore plus discriminant vis-à-vis d'une tentative de fraude.

De préférence, l'acquisition de la première image s'effectue dans le rouge.

L'acquisition biométrique s'effectue avantageusement en plaçant le doigt ou la main au contact d'une surface d'un capteur.

L'invention convient tout particulièrement à une acquisition biométrique s'effectuant sur le doigt.

L'invention a encore pour objet, selon un autre de ses aspects, un capteur pour la mise en œuvre du procédé selon l'invention tel que défini ci-dessus, comportant :
- Un dispositif imageur,
- au moins une source lumineuse pour illuminer avec un éclairage prédéfini uniforme sous au moins une longueur d'onde une surface de l'individu objet de l'acquisition biométrique et acquérir avec le dispositif imageur une première image de cette surface à cette longueur d'onde,
- au moins une source lumineuse pour illuminer avec un éclairage non uniforme sous au moins une longueur d'onde ladite surface et acquérir avec le dispositif imageur au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position, et qui est invariable selon un second paramètre de position,
- un calculateur pour :
   o calculer, pour un ensemble d'au moins n emplacements regroupant chacun des pixels ayant même premier paramètre de position et différentes valeurs du deuxième paramètre de position sur la première et la deuxième image, une correction variant selon le premier paramètre de position, à appliquer localement à la première image pour amener l'amplitude de la texture de la première image sensiblement au niveau de celle sur la deuxième image au même emplacement, ou une correction à appliquer localement à la deuxième image pour amener l'amplitude de la texture de la deuxième image sensiblement au niveau de celle sur la première image au même emplacement,
   ∘ sur la base de la correction ainsi calculée, représentative de ladite loi, générer notamment par comparaison directe ou indirecte à des données de référence, une information sur le caractère artificiel ou non de la matière sur laquelle s'effectue l'acquisition biométrique.

De préférence, le calculateur est configuré pour
- calculer un produit scalaire normalisé Γ représentatif de ladite loi pour un ensemble d'au moins n vecteurs S_{b} de la première image, chaque vecteur S_{b} ayant pour composantes les valeurs des pixels de l'image repérés sur l'image par la même valeur du premier paramètre de position et occupant des positions respectives différentes selon le deuxième paramètre de position, et pour n vecteurs Sₐ de la deuxième image, chaque vecteur Sₐ ayant pour composantes les valeurs des pixels de l'image repérés sur l'image par la même valeur du premier paramètre de position et occupant des positions respectives différentes selon le deuxième paramètre de position, selon la formule Γ= Sₐ.S_{b}/S_{b}.S_{b}, avec de préférence n>10, mieux *n*>20, encore mieux *n*>50,
- générer sur la base du produit scalaire Γ ainsi déterminé, notamment par comparaison à des données de référence, une information sur le caractère artificiel ou non de la matière sur laquelle s'effectue l'acquisition biométrique.

L'invention a également pour objet, selon un autre de ses aspects, un produit programme d'ordinateur, pour la mise en œuvre du procédé selon l'invention, présent sur un support informatique ou téléchargeable, comportant un ensemble d'instructions qui, lorsqu'exécutées par au moins un processeur, provoquent :
- l'illumination avec un éclairage prédéfini uniforme sous au moins une longueur d'onde d'une surface de l'individu objet de l'acquisition biométrique, cette surface présentant une texture, et l'acquisition d'une première image de cette surface à cette longueur d'onde,
- l'illumination avec un éclairage non uniforme sous au moins une longueur d'onde de ladite surface et l'acquisition d'au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position et invariable selon un second paramètre de position,
- le calcul, pour un ensemble d'au moins *n* emplacements regroupant chacun des pixels ayant même premier paramètre de position et différentes valeurs du deuxième paramètre de position sur la première et la deuxième image, d'une correction variant selon le premier paramètre de position, à appliquer localement à la première image pour amener l'amplitude de la texture de la première image sensiblement au niveau de celle sur la deuxième image au même emplacement, ou d'une correction à appliquer localement à la deuxième image pour amener l'amplitude de la texture de la deuxième image sensiblement au niveau de celle sur la première image au même emplacement,
- la génération, sur la base de la correction ainsi calculée, représentative de ladite loi, notamment par comparaison directe ou indirecte à des données de référence, d'une information sur le caractère artificiel ou non de la matière sur laquelle s'effectue l'acquisition biométrique.

L'invention pourra être mieux comprise à la lecture de la description détaillée qui va suivre, d'exemples de mise en œuvre non limitatifs de celle-ci, et à l'examen du dessin annexé, sur lequel :
- La figure 1 est une représentation schématique et partielle d'un capteur selon l'invention,
- la figure 2 représente l'image d'une mire éclairée par une lumière non uniforme,
- la figure 3 représente deux portions d'images d'une empreinte digitale selon un éclairage non uniforme et uniforme respectivement, avec une ligne x=35 matérialisant l'emplacement des pixels de coordonnées (35, y) sur chaque image,
- la figure 4 illustre la variation de l'intensité lumineuse renvoyée par l'empreinte en fonction du deuxième paramètre de position pour la valeur x=35 du premier paramètre de position sur les images de la figure 3,
- la figure 5 représente un exemple de variation du produit scalaire normalisé Γ en fonction du premier paramètre de position x,
- la figure 6 représente un autre exemple de motif d'illumination, générant un profil linéique de diffusion de la lumière,
- les figures 7 et 8 représentent deux autres exemples de motifs d'illumination, générant un profil radial de diffusion de la lumière, et
- la figure 9 illustre un exemple de profil linéique de diffusion de la lumière où l'intensité lumineuse réémise par le doigt varie selon le premier paramètre de position x.

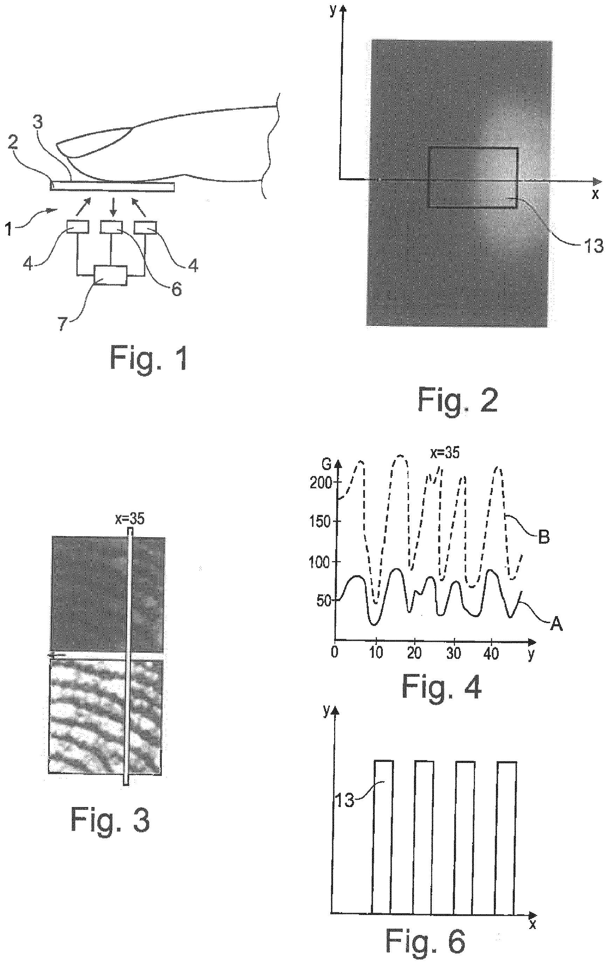

L'invention peut s'appliquer à un capteur 1 d'empreintes digitales tel que représenté schématiquement à la figure 1. Un tel capteur comporte par exemple, de façon connue en soi, une fenêtre transparente 2, définissant une surface 3 sur laquelle le doigt peut être posé lors de l'acquisition biométrique, ainsi qu'une ou plusieurs sources lumineuses 4 éclairant la surface du doigt posée sur la fenêtre 2 durant l'acquisition biométrique, laquelle peut s'effectuer à l'aide d'un dispositif imageur 6 qui permet d'acquérir des images de la surface du doigt posé sur la fenêtre 2. Les sources 4 ainsi que l'imageur 6 sont reliés à un circuit de traitement 7 qui comporte par exemple un ou plusieurs microprocesseurs et une ou plusieurs mémoires électroniques permettant d'exécuter un logiciel assurant le fonctionnement du capteur 1.

Le circuit électronique 7 peut être intégré dans un même boîtier que les sources lumineuses 4 et le dispositif imageur 6.

Les sources 4 sont par exemple réalisées avec une ou plusieurs LEDs ainsi que, le cas échéant, un ou plusieurs dispositifs optiques adaptés qui permettent d'obtenir l'éclairage souhaité.

Ainsi, les sources 4 peuvent être configurées pour permettre un éclairage uniforme de la surface du doigt à au moins une longueur d'onde afin d'acquérir une première image de celle-ci. Les sources 4 peuvent également être agencées pour éclairer le doigt avec un motif de lumière particulier de façon à, comme expliqué dans la suite, pouvoir traiter l'image observée pour calculer un profil de diffusion de la lumière dans le doigt.

Des exemples de capteurs d'empreintes digitales 1 auxquels peut s'appliquer l'invention sont décrits dans les demandes FR 3 025 042 et FR 3 030 834. Quand l'éclairage uniforme résulte de l'allumage de plusieurs sources lumineuses, on peut par exemple n'en allumer qu'une partie pour obtenir un éclairage non uniforme.

L'acquisition sous éclairage uniforme s'effectue par exemple à une longueur d'onde dans le rouge. Plusieurs images peuvent être acquises avec un motif de lumière non uniforme, sous différentes longueurs d'onde, par exemple dans le rouge, le vert et le bleu.

Le dispositif imageur 6 peut être monochrome. Le dispositif imageur 6 peut comporter une matrice de pixels afin d'acquérir une image sans avoir à effectuer de balayage du doigt sur la fenêtre du capteur. Il peut être du type TFT (Thin Film Transistor) ou autre.

L'acquisition d'une image sous éclairage uniforme, ainsi que de la ou des images avec un motif lumineux donnant un éclairage non uniforme, peut être synchrone ou asynchrone.

Une acquisition asynchrone peut notamment s'avérer adaptée à un capteur comportant un dispositif imageur monochrome.

Dans un exemple de mise en œuvre de l'invention, le motif lumineux qui est envoyé sur la surface du doigt de façon à l'éclairer de manière non uniforme présente une invariance selon une direction y, comme illustré à la figure 2, au moins sur une certaine distance de part et d'autre de l'axe x du repère (x, y) associé.

Un tel éclairage permet d'observer une diffusion de la lumière au sein de la peau et une extinction progressive de l'intensité lumineuse réémise par le doigt au fur et à mesure que l'on s'éloigne de la surface éclairée selon l'axe x.

La manière dont décroît cette intensité est caractéristique du milieu dans lequel diffuse la lumière et peut permettre de discriminer un vrai doigt d'un faux.

Sur la figure 2, on a matérialisé par un rectangle la zone dans laquelle s'effectue la mesure, centrée sur l'axe x, de façon à éviter les effets de bords où l'éclairage peut ne pas être aussi invariant que souhaité selon y. Le rectangle couvre par exemple au moins 5 par 5 mm.

On a représenté à la figure 3 une même zone de la surface du doigt objet de l'acquisition biométrique, respectivement sous éclairage non uniforme tel qu'il résulte du motif lumineux représenté à la figure 2 (image du haut sur la figure 3) et sous éclairage uniforme (image du bas sur la figure 3).

La lumière diffuse de droite à gauche sur l'image dans le doigt éclairé de façon non uniforme. On a matérialisé par une ligne sur la figure 3 les pixels situés à l'abscisse x=35 sur l'image.

On suppose que la texture des deux images coïncide, c'est-à-dire que le doigt ne s'est pas déplacé entre le moment où l'acquisition sous lumière uniforme a été faite et le moment où la ou les acquisitions sous éclairage non uniforme ont été effectuées.

Si, notamment en cas d'acquisition asynchrone, on craint un déplacement du doigt entre l'acquisition sous éclairage uniforme et l'acquisition sous éclairage non uniforme, un recalage spatial peut être effectué, comme cela sera détaillé dans la suite.

On a représenté à la figure 4 le niveau de gris G des pixels le long de cette ligne x=35, respectivement pour l'image sous éclairage uniforme (courbe B) et pour l'image sous éclairage non uniforme (courbe A). On peut voir des ondulations qui correspondent respectivement aux crêtes et vallées de la surface de la peau.

Conformément à un exemple de mise en œuvre de l'invention, on cherche la correction à appliquer au signal correspondant à la courbe B de façon à le faire correspondre sensiblement au signal correspondant à la courbe A, ce qui peut permettre d'utiliser la texture de l'image éclairée de façon uniforme comme référence et ainsi d'améliorer le rapport signal sur bruit pour la mesure du profil de décroissance de la lumière au sein de la peau.

On peut ainsi chercher à minimiser l'expression ||Sₐ(x) - ΓS_{b}(x)|| (1) pour chaque vecteur Sₐ(x) et S_{b}(x). Chaque vecteur Sₐ(x) et S_{b}(x) a comme composantes les valeurs de gris des pixels quand y varie, à x constant, ce qui correspond respectivement à une concaténation des valeurs des courbes A pour Sₐ et B pour S_{b}.

L'expression (1) est minimale pour Γ(x) = Sₐ(x).Sb(x)/ ||S_{b}(x)||².

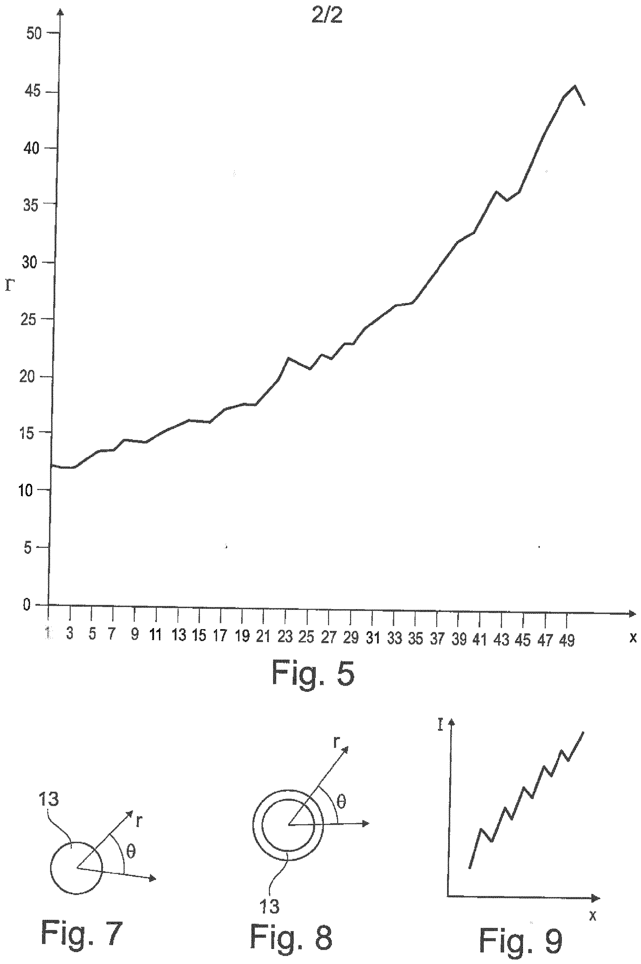

On obtient ainsi la fonction Γ(x) qui donne la correction à appliquer localement à l'image sous éclairage uniforme, telle que celle donnée à la figure 5, qui est représentative, à un facteur près, de la loi de décroissance de l'intensité lumineuse dans la peau en fonction de la distance au motif lumineux lorsque le doigt est éclairé de façon non uniforme.

La courbe obtenue peut être comparée à des données de référence générées à partir d'observations sur un grand nombre d'échantillons et l'on obtient ainsi un moyen permettant de discriminer un vrai doigt d'un faux, les matériaux utilisés pour les faux doigts tels que par exemple le papier ou certaines matières plastiques ayant des propriétés de diffusion de la lumière différentes de celles de la peau.

En multipliant les acquisitions sous différentes longueurs d'onde en éclairage non uniforme du doigt, on peut obtenir des courbes Γ(x) pour différentes longueurs d'onde et ainsi discriminer encore plus finement un vrai doigt d'un faux.

Bien entendu, divers traitements mathématiques peuvent s'appliquer à la fonction Γ(x) en vue de générer des valeurs pouvant être comparées à des données de référence. On peut notamment calculer la somme des écarts entre la fonction observée Γ(x) et une fonction de référence Γ_{ref}(x) par la formule ∫|*Γ*(*x*) - *Γ_{ref}* (*x*)| *dx.* (2), et comparer ce résultat à une valeur de référence.

On peut encore calculer la pente moyenne en un ou plusieurs emplacements sur la courbe Γ(x) et la comparer à des valeurs de référence. On peut aussi utiliser un ou plusieurs classifieurs, comme mentionné plus haut.

De préférence, le nombre de points d'acquisition *n* selon x est grand, de façon à bénéficier d'une précision intéressante dans la comparaison de Γ(x) avec des données de référence.

De préférence, le nombre de points pour lesquels on échantillonne les vecteurs Sₐ et S_{b} selon x est supérieur ou égal à 10, mieux à 20, voire à 30 ou 50
Dans l'exemple qui vient d'être décrit en référence aux figures 2 à 5, l'éclairage non uniforme est obtenu à l'aide d'un motif unique qui présente une invariance selon l'axe y.

Le motif lumineux unique représenté à la figure 2 s'étend par exemple selon l'axe y sur une distance supérieure ou égale à 5 mm.

On peut éclairer la surface avec une pluralité de motifs invariants selon y et distants les uns des autres selon l'axe x comme illustré à la figure 6.

Sur cette figure, on a illustré un éclairage sous la forme de franges 13 parallèles entre elles et à l'axe y, et équiréparties selon l'axe x. Dans un tel cas, on obtient un profil Γ(x) qui est périodique, ce qui permet d'augmenter encore le rapport signal sur bruit en agglomérant les profils obtenus localement pour chaque frange.

Dans le cas des franges de la figure 6, chaque frange s'étend par exemple selon l'axe y sur une distance supérieure ou égale à 5 mm et présente une largeur de 1 mm.

L'invention n'est pas limitée à un éclairage non uniforme invariant selon y, le profil de diffusion et de réémission étant observé selon x.

Ainsi, on peut réaliser l'éclairage non uniforme avec un motif invariant selon l'azimut θ autour d'un centre de symétrie.

Sur la figure 7, on a illustré un tel motif 13 produisant un éclairage non uniforme.

Dans l'exemple de cette figure, le motif 13 est un disque lumineux centré sur un repère à coordonnées polaires. On obtient ainsi un éclairage invariant selon le paramètre de position azimutal θ et une décroissance de l'intensité lumineuse diffusée et réémise selon le paramètre de position radial r.

On peut encore obtenir un motif lumineux invariant selon le paramètre d'azimut θ en illuminant la surface du doigt avec un anneau lumineux tel qu'illustré à la figure 8.

On peut encore réaliser des combinaisons d'éclairages invariants selon l'azimut θ avec par exemple une zone centrale discoïde éclairée et, à une certaine distance de cette zone centrale, un ou plusieurs anneaux de lumière.

Dans le cas où l'invariance est selon l'azimut, on peut calculer le produit scalaire Γ(r) = Sₐ(r).S_{b}(r)/||S_{b}(r)||² d'une façon analogue à ce qui a été décrit précédemment, chaque vecteur Sₐ (éclairage non uniforme) ou S_{b} (éclairage uniforme) ayant comme composantes les valeurs des pixels situées sur l'image à une même valeur de r quand l'azimut θ varie.

En cas d'acquisition asynchrone, on peut procéder au recalage spatial des images, préalablement au calcul de la correction Γ(x) ou Γ(r). Un même relief de la peau aura alors les mêmes coordonnées sur l'image éclairée de façon uniforme et sur l'image éclairée de façon non uniforme.

Pour aider au recalage spatial, on peut traiter l'image éclairée de façon non uniforme de façon à éliminer de celle-ci au mieux l'influence de la décroissance de l'éclairage.

Dans le cas de l'exemple d'un profil linéique comme celui illustré à la figure 9, on a une intensité lumineuse I(x) de la lumière renvoyée par le doigt qui varie globalement selon l'axe x de façon cumulée avec une variation locale liée à la présence de la texture sur la surface éclairée.

On peut calculer le polynôme P(x) qui approxime au mieux l'évolution de l'intensité I(x). Ensuite, on peut retrancher à l'image le polynôme P(x), ou diviser l'image par le polynôme P(x), ce qui donne une image de la texture plus facile à comparer à l'image de la texture sous éclairage uniforme. Les deux images peuvent être comparées et l'une d'entre elles déplacée pour la superposer au mieux à l'autre image afin d'obtenir le recalage recherché.

Dans tout ce qui précède, on a supposé que l'image du doigt était non polluée par des sources lumineuses externes telles que la lumière du jour ou des éclairages artificiels. Pour éliminer l'influence de ces sources sur l'image, on peut procéder à l'acquisition d'une image du « bruit » sans éclairage provenant du capteur et utiliser ensuite cette acquisition pour éliminer l'influence de l'éclairage extérieur, par exemple en retranchant de l'image observée avec les sources lumineuses du capteur le signal provenant de la pollution lumineuse ambiante, tel que donné par l'image du « bruit ».

Bien entendu, l'invention n'est pas limitée aux exemples de réalisation qui viennent d'être décrits.

L'invention convient tout particulièrement à un capteur avec contact du doigt sur la surface 3 de la fenêtre. L'invention n'est toutefois pas limitée à ce type de capteur et s'applique également à un capteur sans contact, permettant l'acquisition des images à distance.

L'invention n'est pas limitée à l'acquisition d'empreintes digitales et peut s'appliquer également à l'acquisition d'empreintes palmaires, et plus généralement à toute acquisition biométrique dans laquelle une lumière est projetée sur une surface présentant une certaine texture, propre à diffuser la lumière en son sein.

Ainsi, l'invention peut s'appliquer à l'acquisition biométrique de l'iris, la texture observée sous éclairage uniforme et non uniforme étant dans ce cas celle du blanc de l'œil et/ou de l'iris.

Dans les exemples qui viennent d'être décrits, on a calculé la correction Γ(x) à appliquer au signal obtenu sous éclairage uniforme de façon à l'amener sensiblement au niveau de celui obtenu sous éclairage non uniforme. Dans une variante on peut calculer la correction β(x) à appliquer à la courbe A de façon à amener l'amplitude du signal correspondant sensiblement à celle du signal sous éclairage uniforme, i.e. la courbe B.

Par « amener sensiblement au niveau », il faut comprendre que la norme ||Sₐ - ΓS_{b}|| ou ||βSₐ - S_{b}||, selon les cas, est minimale.

On peut éventuellement donner, dans le calcul visant à trouver la correction qui convient le mieux, plus de poids à certains pixels de l'image que d'autres. On peut par exemple donner plus de poids aux pixels de grande intensité, lesquels ont un rapport signal sur bruit de quantification plus favorable.

Enfin, bien qu'une acquisition sous éclairage uniforme soit préférable dans la mesure où elle fournit une image de meilleure qualité pour la reconnaissance des minuties, tout éclairage prédéfini, dont les caractéristiques d'illumination dans le plan de la surface du capteur sont connues et varient lentement spatialement (i.e. éclairage localement à peu près uniforme à l'échelle du motif de l'empreinte), peut convenir au calcul d'une grandeur représentative de la loi de diffusion et de réémission de la lumière comme expliqué ci-dessus. On obtient une loi Γ(x) qui peut être traitée, connaissant la loi de distribution, pour retrouver la loi de diffusion.

## Revendications

1. Procédé de détection d'une tentative de fraude par utilisation d'une matière artificielle lors d'une acquisition biométrique, notamment d'empreintes digitales, comportant les étapes consistant à :
- illuminer avec un éclairage prédéfini uniforme sous au moins une longueur d'onde une surface de l'individu objet de l'acquisition biométrique, cette surface présentant une texture, et acquérir une première image de cette surface à cette longueur d'onde,
- illuminer avec un éclairage non uniforme sous au moins une longueur d'onde ladite surface et acquérir au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position (x ou r) et invariable selon un second paramètre de position (y ou θ),
- calculer, pour un ensemble d'au moins *n* emplacements regroupant chacun des pixels ayant même premier paramètre de position (x ou r) et différentes valeurs du deuxième paramètre de position (y ou θ) sur la première et la deuxième image, avec *n* de préférence supérieur ou égal à 10, une correction variant selon le premier paramètre de position, à appliquer localement à la première image pour amener l'amplitude de la texture sur la première image sensiblement au niveau de celle sur la deuxième image au même emplacement, ou une correction à appliquer localement à la deuxième image pour amener l'amplitude de la texture sur la deuxième image sensiblement au niveau de celle sur la première image au même emplacement,
- sur la base de la correction ainsi calculée, représentative de ladite loi, générer, notamment par comparaison directe ou indirecte à des données de référence, une information sur le caractère artificiel ou non de la matière sur laquelle s'effectue l'acquisition biométrique.

2. Procédé selon la revendication 1, la correction à appliquer localement à la première image étant obtenue en calculant un produit scalaire normalisé Γ(x ou r) pour un ensemble d'au moins *n* vecteurs S_{b}(x ou r) de la première image, chaque vecteur S_{b}(x ou r) ayant pour composantes les valeurs des pixels de l'image repérés sur l'image par la même valeur du premier paramètre de position (x ou r) et occupant des positions respectives différentes selon le deuxième paramètre de position (y ou θ), et pour *n* vecteurs Sₐ(x ou r) de la deuxième image, chaque vecteur Sₐ(x ou r) ayant pour composantes les valeurs des pixels de l'image repérés sur l'image par la même valeur du premier paramètre de position (x ou r) et occupant des positions respectives différentes selon le deuxième paramètre de position (y ou θ), selon la formule
Γ(x ou r)= Sₐ(x ou r).S_{b}(x ou r)/S_{b}(x ou r).S_{b}(x ou r) , avec de préférence *n*>10, mieux *n*>20, encore mieux n>50,
procédé dans lequel on génère sur la base du produit scalaire Γ(x ou r) ainsi déterminé, notamment par comparaison à des données de référence, une information sur le caractère artificiel ou non de la matière sur laquelle s'effectue l'acquisition biométrique.

3. Procédé selon la revendication 1, la correction à appliquer localement à la deuxième image étant obtenue en calculant un produit scalaire normalisé β(x ou r) pour un ensemble d'au moins *n* vecteurs Sb(x ou r) de la première image, chaque vecteur S_{b}(x ou r) ayant pour composantes les valeurs des pixels de l'image repérés sur l'image par la même valeur du premier paramètre de position (x ou r) et occupant des positions respectives différentes selon le deuxième paramètre de position (y ou θ), et pour *n* vecteurs Sₐ(x ou r) de la deuxième image, chaque vecteur Sₐ(x ou r) ayant pour composantes les valeurs des pixels de l'image repérés sur l'image par la même valeur du premier paramètre de position (x ou r) et occupant des positions respectives différentes selon le deuxième paramètre de position (y ou θ), selon la formule
β(x ou r)= Sₐ(x ou r).S_{b}(x ou r)/Sₐ(x ou r).Sₐ(x ou r) , avec de préférence *n*>10, mieux *n*>20, encore mieux n>50,
procédé dans lequel on génère sur la base du produit scalaire β(x ou r) ainsi déterminé, notamment par comparaison à des données de référence, une information sur le caractère artificiel ou non de la matière sur laquelle s'effectue l'acquisition biométrique.

4. Procédé selon l'une quelconque des revendications précédentes, l'éclairage non uniforme comportant un ou plusieurs motifs lumineux (13) s'étendant selon le second paramètre de position (y) pour générer un profil linéique de diffusion de la lumière selon le premier paramètre de position (x).

5. Procédé selon la revendication 4, l'éclairage non uniforme comportant plusieurs bandes lumineuses (13) parallèles entre elles et perpendiculaires à un axe défini par le premier paramètre de position (x).

6. Procédé selon l'une quelconque des revendications 1 à 3, l'éclairage non uniforme comportant un ou plusieurs motifs (13) à symétrie de révolution, notamment sous forme de disque(s) ou d'anneau(x).

7. Procédé selon l'une quelconque des revendications précédentes, l'acquisition des première et deuxième images étant synchrone.

8. Procédé selon l'une quelconque des revendications 1 à 6, l'acquisition des première et deuxième images étant asynchrone.

9. Procédé selon la revendication précédente, comportant un recalage spatial des première et deuxième images préalablement au calcul de ladite correction.

10. Procédé selon la revendication 8, la deuxième image étant retraitée avant recalage spatial en calculant une approximation P(x ou r) de l'intensité lumineuse I(x our) sur l'image selon le premier paramètre de position et en utilisant cette intensité approximée, de préférence en retranchant à la deuxième image cette intensité approximée, pour obtenir une image retraitée de la texture, facilitant sa comparaison avec la première image.

11. Procédé selon la revendication 10, l'approximation étant polynomiale.

12. Procédé selon l'une quelconque des revendications précédentes, dans lequel on procède à plusieurs acquisitions de deuxièmes images à des longueurs d'ondes différentes, notamment dans le rouge, le vert et le bleu.

13. Procédé selon l'une quelconque des revendications précédentes, l'acquisition de la première image s'effectuant dans le rouge.

14. Procédé selon l'une quelconque des revendications précédentes, l'acquisition biométrique s'effectuant en plaçant le doigt ou la main au contact d'une surface (3) d'un capteur (1).

15. Procédé selon l'une quelconque des revendications précédentes, l'acquisition biométrique s'effectuant sur le doigt.

16. Procédé selon l'une quelconque des revendications précédentes, avec *n* supérieur ou égal à 10.

17. Capteur (1) pour la mise en œuvre du procédé selon l'une quelconque des revendications précédentes, comportant :
- Un dispositif imageur (6),
- au moins une source lumineuse (4) pour illuminer avec un éclairage prédéfini uniforme, sous au moins une longueur d'onde une surface de l'individu objet de l'acquisition biométrique et acquérir avec le dispositif imageur (6) une première image de cette surface à cette longueur d'onde,
- au moins une source lumineuse (4) pour illuminer avec un éclairage non uniforme sous au moins une longueur d'onde ladite surface et acquérir avec le dispositif imageur (6) au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position (x ou r), et qui est invariable selon un second paramètre de position (you θ),
- un calculateur (7) pour :
∘ calculer, pour un ensemble d'au moins *n* emplacements regroupant chacun des pixels ayant même premier paramètre de position et différentes valeurs du deuxième paramètre de position sur la première et la deuxième image, une correction (Γ(x ou r)) variant selon le premier paramètre de position (x ou r), à appliquer localement à la première image pour amener l'amplitude de la texture sur la première image sensiblement au niveau de celle sur la deuxième image au même emplacement, ou une correction à appliquer localement à la deuxième image pour amener l'amplitude de la texture sur la deuxième image sensiblement au niveau de celle sur la première image au même emplacement,
∘ sur la base de la correction ainsi calculée, représentative de ladite loi, générer, notamment par comparaison directe ou indirecte à des données de référence, une information sur le caractère artificiel ou non de la matière sur laquelle s'effectue l'acquisition biométrique.

18. Capteur (1) selon la revendication 17, le calculateur (7) étant configuré pour
- calculer un produit scalaire normalisé Γ(x ou r) représentatif de ladite loi pour un ensemble d'au moins *n* vecteurs S_{b}(x ou r) de la première image, chaque vecteur S_{b}(x ou r) ayant pour composantes les valeurs des pixels de l'image repérés sur l'image par la même valeur du premier paramètre de position (x ou r) et occupant des positions respectives différentes selon le deuxième paramètre de position (y ou θ), et pour *n* vecteurs Sₐ(x ou r) de la deuxième image, chaque vecteur Sₐ(x our) ayant pour composantes les valeurs des pixels de l'image repérés sur l'image par la même valeur du premier paramètre de position (x our) et occupant des positions respectives différentes selon le deuxième paramètre de position (y ou θ), selon la formule Γ(x ou r)= Sₐ(x ou r).S_{b}(x ou r)/S_{b}(x ou r).S_{b}(x ou r) dans le cas d'une correction à appliquer localement à la première image, avec de préférence *n*>10, mieux *n*>50,
- générer sur la base du produit scalaire Γ(x ou r) ainsi déterminé, notamment par comparaison à des données de référence, une information sur le caractère artificiel ou non de la matière sur laquelle s'effectue l'acquisition biométrique.

19. Capteur (1) selon la revendication 17, le calculateur (7) étant configuré pour
- calculer un produit scalaire normalisé β(x ou r) représentatif de ladite loi pour un ensemble d'au moins *n* vecteurs S_{b}(x ou r) de la première image, chaque vecteur Sb(x ou r) ayant pour composantes les valeurs des pixels de l'image repérés sur l'image par la même valeur du premier paramètre de position (x ou r) et occupant des positions respectives différentes selon le deuxième paramètre de position (y ou θ), et pour *n* vecteurs Sₐ(x ou r) de la deuxième image, chaque vecteur Sₐ(x ou r) ayant pour composantes les valeurs des pixels de l'image repérés sur l'image par la même valeur du premier paramètre de position (x ou r) et occupant des positions respectives différentes selon le deuxième paramètre de position (y ou θ), selon la formule β(x ou r)= Sₐ(x ou r).S_{b}(x ou r)/Sₐ(x ou r).Sₐ(x ou r) dans le cas d'une correction à appliquer localement à la deuxième image, avec de préférence *n*>10, mieux *n*>50,
générer sur la base du produit scalaire β(x ou r) ainsi déterminé, notamment par comparaison à des données de référence, une information sur le caractère artificiel ou non de la matière sur laquelle s'effectue l'acquisition biométrique

20. Produit programme d'ordinateur, pour la mise en œuvre du procédé selon l'une quelconque des revendications 1 à 16, présent sur un support informatique ou téléchargeable, comportant un ensemble d'instructions qui, lorsqu'exécutées par au moins un processeur, provoquent :
- l'illumination avec un éclairage prédéfini uniforme sous au moins une longueur d'onde d'une surface de l'individu objet de l'acquisition biométrique, cette surface présentant une texture, et l'acquisition d'une première image de cette surface à cette longueur d'onde,
- l'illumination avec un éclairage non uniforme sous au moins une longueur d'onde de ladite surface et l'acquisition d'au moins une deuxième image de cette surface sous cet éclairage non uniforme, l'éclairage non uniforme amenant la lumière à diffuser au sein de la matière illuminée avec une intensité qui varie selon une loi fonction d'un premier paramètre de position (x ou r) et invariable selon un second paramètre de position (you θ),
- le calcul, pour un ensemble d'au moins n emplacements regroupant chacun des pixels ayant même premier paramètre de position et différentes valeurs du deuxième paramètre de position sur la première et la deuxième image, d'une correction (Γ(x ou r)) variant selon le premier paramètre de position, à appliquer localement à la première image pour amener l'amplitude de la texture sur la première image sensiblement au niveau de celle sur la deuxième image au même emplacement, ou d'une correction à appliquer localement à la deuxième image pour amener l'amplitude de la texture sur la deuxième image sensiblement au niveau de celle sur la première image au même emplacement,
- la génération, sur la base de la correction ainsi calculée, représentative de ladite loi, notamment par comparaison directe ou indirecte à des données de référence, d'une information sur le caractère artificiel ou non de la matière sur laquelle s'effectue l'acquisition biométrique.

## Patentansprüche

1. Verfahren zur Erkennung eines Betrugsversuchs durch Verwendung einer künstlichen Materie bei einer biometrischen Erfassung, insbesondere von Fingerabdrücken, umfassend die folgenden Schritte:
- Beleuchten, mit einer vorgegebenen gleichförmigen Beleuchtung unter mindestens einer Wellenlänge, einer Fläche der Person, die Gegenstand der biometrischen Erfassung ist, wobei diese Fläche eine Struktur aufweist, und Erfassen eines ersten Bildes dieser Fläche bei dieser Wellenlänge,
- Beleuchten, mit einer ungleichförmigen Beleuchtung unter mindestens einer Wellenlänge, der Fläche und Erfassen mindestens eines zweiten Bildes dieser Fläche unter dieser ungleichförmigen Beleuchtung, wobei die ungleichförmige Beleuchtung das Licht dazu bringt, in der beleuchteten Materie mit einer Intensität zu streuen, die gemäß einem von einem ersten Lageparameter (x oder r) abhängigen Gesetz variiert und gemäß einem zweiten Lageparameter (y oder θ) invariabel ist,
- Berechnen, für eine Menge von mindestens n Stellen, die jeweils Pixel beinhalten, die den gleichen ersten Lageparameter (x oder r) und unterschiedliche Werte des zweiten Lageparameters (y oder θ) auf dem ersten und dem zweiten Bild aufweisen, wobei n bevorzugt größer oder gleich 10 ist, einer gemäß dem ersten Lageparameter variierenden Korrektur, die lokal auf das erste Bild anzuwenden ist, um die Amplitude der Struktur auf dem ersten Bild im Wesentlichen auf das Niveau derjenigen auf dem zweiten Bild an der gleichen Stelle zu bringen, oder einer Korrektur, die lokal auf das zweite Bild anzuwenden ist, um die Amplitude der Struktur auf dem zweiten Bild im Wesentlichen auf das Niveau derjenigen auf dem ersten Bild an der gleichen Stelle zu bringen,
- auf der Basis der so berechneten Korrektur, die für das Gesetz repräsentativ ist, Erzeugen, insbesondere durch direktes oder indirektes Vergleichen mit Referenzdaten, einer Information über den künstlichen oder nicht künstlichen Charakter der Materie, an der die biometrische Erfassung durchgeführt wird.

2. Verfahren nach Anspruch 1, wobei die lokal auf das erste Bild anzuwendende Korrektur erhalten wird, indem ein standardisiertes Skalarprodukt Γ(x oder r) für eine Menge von mindestens n Vektoren S_{b}(x oder r) des ersten Bildes berechnet wird, wobei jeder Vektor S_{b}(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, und für n Vektoren Sₐ (x oder r) des zweiten Bildes, wobei jeder Vektor Sₐ(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, nach der Formel Γ(x oder r) = Sₐ(x oder r).S_{b}(x oder r)/S_{b}(x oder r).S_{b}(x oder r), mit bevorzugt n>10, besser n>20, noch besser n>50,
wobei bei dem Verfahren auf der Basis des so bestimmten Skalarprodukts Γ(x oder r), insbesondere durch Vergleichen mit Referenzdaten, eine Information über den künstlichen oder nicht künstlichen Charakter der Materie erzeugt wird, an der die biometrische Erfassung durchgeführt wird.

3. Verfahren nach Anspruch 1, wobei die lokal auf das zweite Bild anzuwendende Korrektur erhalten wird, indem ein standardisiertes Skalarprodukt β(x oder r) für eine Menge von mindestens n Vektoren S_{b}(x oder r) des ersten Bildes berechnet wird, wobei jeder Vektor S_{b}(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, und für n Vektoren Sₐ (x oder r) des zweiten Bildes, wobei jeder Vektor Sₐ(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, nach der Formel β(x oder r) = Sₐ (x oder r).S_{b}(x oder r)/Sₐ(x oder r).Sₐ(x oder r), mit bevorzugt n>10, besser n>20, noch besser n>50,
wobei bei dem Verfahren auf der Basis des so bestimmten Skalarprodukts β(x oder r), insbesondere durch Vergleichen mit Referenzdaten, eine Information über den künstlichen oder nicht künstlichen Charakter der Materie erzeugt wird, an der die biometrische Erfassung durchgeführt wird.

4. Verfahren nach einem der vorhergehenden Ansprüche, wobei die ungleichförmige Beleuchtung einem oder mehreren Lichtmustern (13) entspricht, die sich gemäß dem zweiten Lageparameter (y) erstrecken, um ein lineares Streuungsprofil des Lichts gemäß dem ersten Lageparameter (x) zu erzeugen.

5. Verfahren nach Anspruch 4, wobei die ungleichförmige Beleuchtung mehrere Lichtbänder (13) umfasst, die parallel zueinander und senkrecht zu einer durch den ersten Lageparameter (x) definierten Achse sind.

6. Verfahren nach einem der Ansprüche 1 bis 3, wobei die ungleichförmige Beleuchtung ein oder mehrere rotationssymmetrische Muster (13) umfasst, insbesondere in Form von einer oder mehreren Scheibe(n) oder von einem oder mehreren Ring(en).

7. Verfahren nach einem der vorhergehenden Ansprüche, wobei die Erfassung der ersten und zweiten Bilder synchron ist.

8. Verfahren nach einem der Ansprüche 1 bis 6, wobei die Erfassung der ersten und zweiten Bilder asynchron ist.

9. Verfahren nach dem vorhergehenden Anspruch, umfassend eine räumliche Justierung der ersten und zweiten Bilder vor dem Berechnen der Korrektur.

10. Verfahren nach Anspruch 8, wobei das zweite Bild vor der räumlichen Justierung nachbearbeitet wird, indem eine Approximation P(x oder r) der Lichtintensität I(x oder r) auf dem Bild gemäß dem ersten Lageparameter berechnet wird und indem diese approximierte Intensität verwendet wird, bevorzugt durch Abziehen dieser approximierten Intensität vom zweiten Bild, um ein nachbearbeitetes Bild der Struktur zu erhalten, das sein Vergleichen mit dem ersten Bild erleichtert.

11. Verfahren nach Anspruch 10, wobei die Approximation polynominal ist.

12. Verfahren nach einem der vorhergehenden Ansprüche, bei dem mehrere Erfassungen von zweiten Bildern bei unterschiedlichen Wellenlängen vorgenommen werden, insbesondere im Rot, Grün und Blau.

13. Verfahren nach einem der vorhergehenden Ansprüche, wobei die Erfassung des ersten Bildes im Rot erfolgt.

14. Verfahren nach einem der vorhergehenden Ansprüche, wobei die biometrische Erfassung erfolgt, indem der Finger oder die Hand in Kontakt mit einer Fläche (3) eines Sensors (1) gebracht wird.

15. Verfahren nach einem der vorhergehenden Ansprüche, wobei die biometrische Erfassung am Finger erfolgt.

16. Verfahren nach einem der vorhergehenden Ansprüche, wobei n größer oder gleich 10 ist.

17. Sensor (1) zur Umsetzung des Verfahrens nach einem der vorhergehenden Ansprüche, umfassend:
- eine bildgebende Vorrichtung (6),
- mindestens eine Lichtquelle (4), um mit einer vorgegebenen gleichförmigen Beleuchtung unter mindestens einer Wellenlänge eine Fläche der Person, die Gegenstand der biometrischen Erfassung ist, zu beleuchten und mit der bildgebenden Vorrichtung (6) ein Bild dieser Fläche bei dieser Wellenlänge zu erfassen,
- mindestens eine Lichtquelle (4), um mit einer ungleichförmigen Beleuchtung unter mindestens einer Wellenlänge die Fläche zu beleuchten und mit der bildgebenden Vorrichtung (6) mindestens ein zweites Bild dieser Fläche unter dieser ungleichförmigen Beleuchtung zu erfassen, wobei die ungleichförmige Beleuchtung das Licht dazu bringt, in der beleuchteten Materie mit einer Intensität zu streuen, die gemäß einem von einem ersten Lageparameter (x oder r) abhängigen Gesetz variiert und gemäß einem zweiten Lageparameter (y oder θ) invariabel ist,
- einen Rechner (7), um:
∘ für eine Menge von mindestens n Stellen, die jeweils Pixel beinhalten, die den gleichen ersten Lageparameter und unterschiedliche Werte des zweiten Lageparameters auf dem ersten und dem zweiten Bild aufweisen, eine gemäß dem ersten Lageparameer (x oder r) variierende Korrektur (Γ(x oder r)) zu berechnen, die lokal auf das erste Bild anzuwenden ist, um die Amplitude der Struktur auf dem ersten Bild im Wesentlichen auf das Niveau derjenigen auf dem zweiten Bild an der gleichen Stelle zu bringen, oder eine Korrektur, die lokal auf das zweite Bild anzuwenden ist, um die Amplitude der Struktur auf dem zweiten Bild im Wesentlichen auf das Niveau derjenigen auf dem ersten Bild an der gleichen Stelle zu bringen,
∘ auf der Basis der so berechneten Korrektur, die für das Gesetz repräsentativ ist, insbesondere durch direktes oder indirektes Vergleichen mit Referenzdaten, eine Information über den künstlichen oder nicht künstlichen Charakter der Materie zu erzeugen, an der die biometrische Erfassung durchgeführt wird.

18. Sensor (1) nach Anspruch 17, wobei der Rechner (7) dazu ausgestaltet ist,
- ein standardisiertes Skalarprodukt Γ(x oder r) , das für das Gesetz repräsentativ ist, für eine Menge von mindestens n Vektoren S_{b}(x oder r) des ersten Bildes zu berechnen, wobei jeder Vektor S_{b}(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, und für n Vektoren Sₐ(x oder r) des zweiten Bildes, wobei jeder Vektor Sₐ(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, nach der Formel Γ(x oder r) = Sₐ(x oder r).S_{b}(x oder r)/S_{b}(x oder r).S_{b}(x oder r) im Fall einer Korrektur, die lokal auf das erste Bild anzuwenden ist, mit bevorzugt n>10, besser n>50,
- auf der Basis des so bestimmten Skalarprodukts Γ(x oder r), insbesondere durch Vergleichen mit Referenzdaten, eine Information über den künstlichen oder nicht künstlichen Charakter der Materie zu erzeugen, an der die biometrische Erfassung durchgeführt wird.

19. Sensor (1) nach Anspruch 17, wobei der Rechner (7) dazu ausgestaltet ist,
- ein standardisiertes Skalarprodukt β(x oder r), das für das Gesetz repräsentativ ist, für eine Menge von mindestens n Vektoren S_{b}(x oder r) des ersten Bildes zu berechnen, wobei jeder Vektor S_{b}(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, und für n Vektoren Sₐ(x oder r) des zweiten Bildes, wobei jeder Vektor Sₐ(x oder r) als Komponenten die Werte der Pixel des Bildes hat, die auf dem Bild mit dem gleichen Wert des ersten Lageparameters (x oder r) ausgemacht wurden und unterschiedliche jeweilige Positionen gemäß dem zweiten Lageparameter (y oder θ) einnehmen, nach der Formel β(x oder r) = Sₐ(x oder r).S_{b}(x oder r)/Sₐ(x oder r).Sₐ(x oder r) im Fall einer Korrektur, die lokal auf das zweite Bild anzuwenden ist, mit bevorzugt n>10, besser n>50,
- auf der Basis des so bestimmten Skalarprodukts β(x oder r), insbesondere durch Vergleichen mit Referenzdaten, eine Information über den künstlichen oder nicht künstlichen Charakter der Materie zu erzeugen, an der die biometrische Erfassung durchgeführt wird.

20. Computerprogrammprodukt zur Umsetzung des Verfahrens nach einem der Ansprüche 1 bis 16, das sich auf einem Datenträger befindet oder herunterladbar ist, umfassend eine Menge von Anweisungen, die bei ihrer Ausführung durch mindestens einen Prozessor veranlassen:
- das Beleuchten, mit einer vorgegebenen gleichförmigen Beleuchtung unter mindestens einer Wellenlänge, einer Fläche der Person, die Gegenstand der biometrischen Erfassung ist, wobei diese Fläche eine Struktur aufweist, und Erfassen eines ersten Bildes dieser Fläche bei dieser Wellenlänge,
- das Beleuchten, mit einer ungleichförmigen Beleuchtung unter mindestens einer Wellenlänge, der Fläche und das Erfassen mindestens eines zweiten Bildes dieser Fläche unter dieser ungleichförmigen Beleuchtung, wobei die ungleichförmige Beleuchtung das Licht dazu bringt, in der beleuchteten Materie mit einer Intensität zu streuen, die gemäß einem von einem ersten Lageparameter (x oder r) abhängigen Gesetz variiert und gemäß einem zweiten Lageparameter (y oder θ) invariabel ist,
- das Berechnen, für eine Menge von mindestens n Stellen, die jeweils Pixel beinhalten, die den gleichen ersten Lageparameter und unterschiedliche Werte des zweiten Lageparameters auf dem ersten und dem zweiten Bild aufweisen, einer gemäß dem ersten Lageparameter variierenden Korrektur (Γ(x oder r)), die lokal auf das erste Bild anzuwenden ist, um die Amplitude der Struktur auf dem ersten Bild im Wesentlichen auf das Niveau derjenigen auf dem zweiten Bild an der gleichen Stelle zu bringen, oder einer Korrektur, die lokal auf das zweite Bild anzuwenden ist, um die Amplitude der Struktur auf dem zweiten Bild im Wesentlichen auf das Niveau derjenigen auf dem ersten Bild an der gleichen Stelle zu bringen,
- das Erzeugen, auf der Basis der so berechneten Korrektur, die für das Gesetz repräsentativ ist, insbesondere durch direktes oder indirektes Vergleichen mit Referenzdaten, einer Information über den künstlichen oder nicht künstlichen Charakter der Materie, an der die biometrische Erfassung durchgeführt wird.

## Claims

1. Method for detecting attempted fraud by using an artificial material during a biometric acquisition, particularly of fingerprints, comprising the following steps:
- illuminating, with predefined uniform lighting under at least one wavelength, a surface of the individual subject to the biometric acquisition, said surface having a texture, and acquiring a first image of said surface at said wavelength;
- illuminating, with non-uniform lighting under at least one wavelength, said surface and acquiring at least one second image of said surface under said non-uniform lighting, the non-uniform lighting causing light to diffuse within the illuminated material at an intensity that varies according to a law that is a function of a first position parameter (x or r) and is invariable along a second position parameter (y or θ);
- computing, for a set of at least n locations each consolidating pixels with the same first position parameter (x or r) and different values for the second position parameter (y or θ) on the first and the second image, with n preferably being greater than or equal to 10, a correction, varying along the first position parameter, that is to be locally applied to the first image to bring the amplitude of the texture on the first image substantially to the level of that on the second image at the same location, or a correction that is to be locally applied to the second image to bring the amplitude of the texture on the second image substantially to the level of that on the first image at the same location;
- generating, on the basis of the correction thus computed, which represents said law, particularly in direct or indirect comparison to reference data, information relating to the artificial or non-artificial nature of the material on which the biometric acquisition is performed.

2. Method according to Claim 1, the correction that is to be locally applied to the first image being obtained by computing a normalized scalar product Γ(x or r) for a set of at least n vectors S_{b}(x or r) of the first image, each vector S_{b} (x or r) having as components the values of the pixels of the image that are identified on the image by the same value of the first position parameter (x or r) and occupying different respective positions along the second position parameter (y or θ), and for n vectors Sₐ(x or r) of the second image, each vector Sₐ(x or r) having as components the values of the pixels of the image that are identified on the image by the same value of the first position parameter (x or r) and occupying different respective positions along the second position parameter (y or θ), according to the formula:
Γ(x or r) = Sₐ(x or r).S_{b}(x or r)/S_{b}(x or r).S_{b}(x or r), preferably with n > 10, more preferably with *n* > 20, even more preferably with n > 50,
method wherein information relating to the artificial or non-artificial nature of the material on which the biometric acquisition is performed is generated on the basis of the scalar product Γ(x or r) thus determined, particularly in comparison to reference data.

3. Method according to Claim 1, the correction that is to be locally applied to the second image being obtained by computing a normalized scalar product β(x or r) for a set of at least n vectors S_{b}(x or r) of the first image, each vector S_{b}(x or r) having as components the values of the pixels of the image that are identified on the image by the same value of the first position parameter (x or r) and occupying different respective positions along the second position parameter (y or θ), and for n vectors Sₐ(x or r) of the second image, each vector Sₐ(x or r) having as components the values of the pixels of the image that are identified on the image by the same value of the first position parameter (x or r) and occupying different respective positions along the second position parameter (y or θ), according to the formula:
β(x or r) = Sₐ(x or r).S_{b}(x or r)/Sₐ(x or r).Sₐ(x or r), preferably with n > 10, more preferably with *n* > 20, even more preferably with n > 50,
method wherein information relating to the artificial or non-artificial nature of the material on which the biometric acquisition is performed is generated on the basis of the scalar product β(x or r) thus determined, particularly in comparison to reference data.

4. Method according to any of the preceding claims, the non-uniform lighting comprising one or more light patterns (13) extending along the second position parameter (y) in order to generate a linear profile for diffusing light along the first position parameter (x).

5. Method according to Claim 4, the non-uniform lighting comprising a plurality of light strips (13) parallel to each other and perpendicular to an axis defined by the first position parameter (x).

6. Method according to any of Claims 1 to 3, the non-uniform lighting comprising one or more patterns (13) with rotational symmetry, particularly in the form of one or more disk(s) or ring(s).

7. Method according to any of the preceding claims, the acquisition of the first and second images being synchronous.

8. Method according to any of Claims 1 to 6, the acquisition of the first and second images being asynchronous.

9. Method according to the preceding claim, comprising spatial adjustment of the first and second images prior to the computation of said correction.

10. Method according to Claim 8, the second image being reprocessed before spatial adjustment by computing an approximation P(x or r) of the luminous intensity I(x or r) on the image along the first position parameter and by using this approximated intensity, preferably by subtracting this approximated intensity from the second image, in order to obtain a reprocessed image of the texture, facilitating its comparison with the first image.

11. Method according to Claim 10, the approximation being polynomial.

12. Method according to any of the preceding claims, wherein a plurality of acquisitions of second images is completed at different wavelengths, particularly in the red, green and blue ranges.

13. Method according to any of the preceding claims, the acquisition of the first image being performed in the red range.

14. Method according to any of the preceding claims, the biometric acquisition being performed by placing the finger or the hand in contact with a surface (3) of a sensor (1).

15. Method according to any of the preceding claims, the biometric acquisition being performed on the finger.

16. Method according to any of the preceding claims, with n being greater than or equal to 10.

17. Sensor (1) for implementing the method according to any of the preceding claims, comprising:
- an imaging device (6);
- at least one light source (4) for illuminating, with predefined uniform lighting under at least one wavelength, a surface of the individual subject to the biometric acquisition and acquiring, with the imaging device (6), a first image of said surface at said wavelength;
- at least one light source (4) for illuminating, with non-uniform lighting under at least one wavelength, said surface and acquiring, with the imaging device (6), at least one second image of said surface under said non-uniform lighting, the non-uniform lighting causing light to diffuse within the illuminated material at an intensity that varies according to a law that is a function of a first position parameter (x or r) and is invariable along a second position parameter (y or θ);
- a computer (7) for:
o computing, for a set of at least n locations each consolidating pixels with the same first position parameter and different values of the second position parameter on the first and the second image, a correction (Γ(x or r)), varying along the first position parameter (x or r), that is to be locally applied to the first image to bring the amplitude of the texture on the first image substantially to the level of that on the second image at the same location, or a correction that is to be locally applied to the second image to bring the amplitude of the texture on the second image substantially to the level of that on the first image at the same location;
o generating, on the basis of the correction thus computed, which represents said law, particularly in direct or indirect comparison to reference data, information relating to the artificial or non-artificial nature of the material on which the biometric acquisition is performed.

18. Sensor (1) according to Claim 17, the computer (7) being configured to:
- compute a normalized scalar product Γ(x or r) representing said law for a set of at least *n* vectors S_{b} (x or r) of the first image, each vector S_{b} (x or r) having as components the values of the pixels of the image that are identified on the image by the same value of the first position parameter (x or r) and occupying different respective positions along the second position parameter (y or θ), and for n vectors Sₐ(x or r) of the second image, each vector Sₐ(x or r) having as components the values of the pixels of the image that are identified on the image by the same value of the first position parameter (x or r) and occupying different respective positions according to the second position parameter (y or θ), according to the formula: Γ(x or r) = Sₐ(x or r).S_{b}(x or r)/S_{b}(x or r). S_{b} (x or r) in the case of a correction that is to be locally applied to the first image, preferably with *n* > 10, more preferably with *n >* 50;
- generate information relating to the artificial or non-artificial nature of the material on which the biometric acquisition is performed on the basis of the scalar product Γ(x or r) thus determined, particularly in comparison to reference data.

19. Sensor (1) according to Claim 17, the computer (7) being configured to:
- compute a normalized scalar product β(x or r) representing said law for a set of at least *n* vectors S_{b}(x or r) of the first image, each vector S_{b} (x or r) having as components the values of the pixels of the image that are identified on the image by the same value of the first position parameter (x or r) and occupying different respective positions along the second position parameter (y or θ), and for n vectors Sₐ(x or r) of the second image, each vector Sₐ(x or r) having as components the values of the pixels of the image that are identified on the image by the same value of the first position parameter (x or r) and occupying different respective positions along the second position parameter (y or θ), according to the formula: β(x or r) = Sₐ(x or r).S_{b}(x or r)/Sₐ(x or r).Sₐ(x or r) in the case of a correction that is to be locally applied to the second image, preferably with *n* > 10, more preferably with *n* > 50;
- generate information relating to the artificial or non-artificial nature of the material on which the biometric acquisition is performed on the basis of the scalar product β(x or r) thus determined, particularly in comparison to reference data.

20. Computer program product, for implementing the method according to any of Claims 1 to 16, present on a computer medium or being downloadable, comprising a set of instructions, which, when executed by at least one processor, initiate:
- illumination, with predefined uniform lighting under at least one wavelength, of a surface of the individual subject to the biometric acquisition, said surface having a texture, and acquisition of a first image of said surface at said wavelength;
- illumination, with non-uniform lighting under at least one wavelength, of said surface and acquisition of at least one second image of said surface under said non-uniform lighting, the non-uniform lighting causing light to diffuse within the illuminated material at an intensity that varies according to a law that is a function of a first position parameter (x or r) and is invariable along a second position parameter (y or θ);
- computation, for a set of at least n locations each consolidating pixels with the same first position parameter and different values of the second position parameter on the first and the second image, of a correction (Γ(x or r)), varying along the first position parameter, that is to be locally applied to the first image to bring the amplitude of the texture on the first image substantially to the level of that on the second image at the same location, or of a correction that is to be locally applied to the second image to bring the amplitude of the texture on the second image substantially to the level of that on the first image at the same location;
- generation, on the basis of the correction thus computed, which represents said law, particularly in direct or indirect comparison to reference data, of information relating to the artificial or non-artificial nature of the material on which the biometric acquisition is performed.
